# EUROPEAN PATENT APPLICATION

(11) **EP 1 178 704 A2**
(43) Date of publication of application: **06.02.2002**
(21) Application number: 01201719.0
(22) Date of filing: 09.05.2001
(51) Int. Cl.: H05B 3/00

(54) **Container equipped with a thermally self regulated heater, applicable inparticular for heating substances to be maintained at a constant temperature.**

(30) Priority: 11.05.2000 IT PN000029
(71) Applicant: Borghese Renato, 33085 Maniago (PN) (IT)
(72) Inventor: Borghese Renato, 33085 Maniago (PN) (IT)
(74) Representative: Da Riva, Ermanno

(57) **Abstract**

The present invention relates to a container equipped with a thermally self regulating heater, applicable in particular for heating substances to be maintained at a highest constant temperature. The container (1) is substantially similar to the thermally insulated containers for pic-nic and it is equipped with a particular self regulating cable (3) of a known type that is preferably placed in the insulated air space of the perimetrical walls forming the tank (11) and it is wound in close proximity round the inner walls (112).

The vessels ( R ) containing the substances to be heated and maintained at a suitable highest operating temperature are placed in the inner space (V) of the tank (11) which can be closed by a suitable cover (12).

When the self regulating cable (3) is supplied with electric power, the inner space (V) and the substances stored therein are progressively heated.

Since the thermal emission of the self regulating cable (3) decreases as the temperature increases, the heating is automatically cut off when it is reached the desired highest temperature.

## Description

The present invention relates to a container, in particular to a container of portable type having various shapes and dimensions according to its respective use. In the heat insulated and suitably thick walls of the container is inserted a particular cable of a known type generating values of electrical conductance which vary, in opposite manner with respect to the changes of the reached temperature, so much that they practically assume the value zero when it is reached the characteristic maximum temperature of the used cable. The vessels and their substances stored in the container can be heated and maintained at a constant maximum temperature.

As it is known, various substances must be heated at operating temperatures before their use in different fields and for various purposes. As an example, variuos types of foaming polyurethanes producing a solid or spongy cellular material are specially used in building fields for filling dead-air spaces or cracks, for surface waterproofing as well for fastening different elements. Such substances are usually contained in metallic cylindrical vessels which have various shapes and dimensions.

Since such substances need an optimum operating temperature between 4° C and 25° C , it is necessary to heat the above-mentioned vessels ( cylinders ) when the substances are used in the wintertime or with an ambient temperature which is lower than the optimum operating temperature.

The heating operation is always carried out by unsuitable means and in irrational, approximate and very dangerous ways.

The more used heating systems require to dip said vessels in boiling water, or to place them over radiators, electric stoves and other heating devices, even directly licked by the flames of welding torches as well as burners of various type.

Clearly, the dipping in boling water without an adequate control can produce overheating to temperatures which are higher than the allowable temperature and cause dangerous drawbacks. The other above mentioned heating systems are still more than unfit and dangerous.

In practice, all the used heating systems are dangerous because they can cause, as it has already happened on several cases, the explosion of the vessel/vessels with heavy damages either to the things or still more to the people.

Therefore, it would be convenient, or rather necessary, to use suitable heating means as suitable containers provided with electrical heaters which are controlled by relative devices as electromechanical, electronic, thermoelectronic thermostates.

But, this involves structural complications and, as a consequence, higher production costs. Moreover, all the usable thermostatic devices are subject to faults. In this case, if the fault is a non-stop of the electric power, it causes a rise of the temperature in the the vessels containing the substances to be heated so much that the vessels can explode and destroy the container in which they have been stored with consequent heavy danger to the operators or to the people in the vicinity.

It is the aim of the present invention to overcome the above stated drawbacks by providing the container which is the object of the present invention.

In order to better understand the features and the advantages attainable by the container forming the object of the present invention, this container is hereinafter described, by way of a not limitative example only, and with reference to the accompanying drawings, wherein:
- the Figure 1 is a perspective view of the container according to the present invention; a wall of the container is partially broken away for showing the position of the particular heating element which is applied to the walls of the container according to the present invention;
- the Figure 2 is a cross-sectional view made according to a longitudinal hortogonal plane of the same container of the Figure 1.

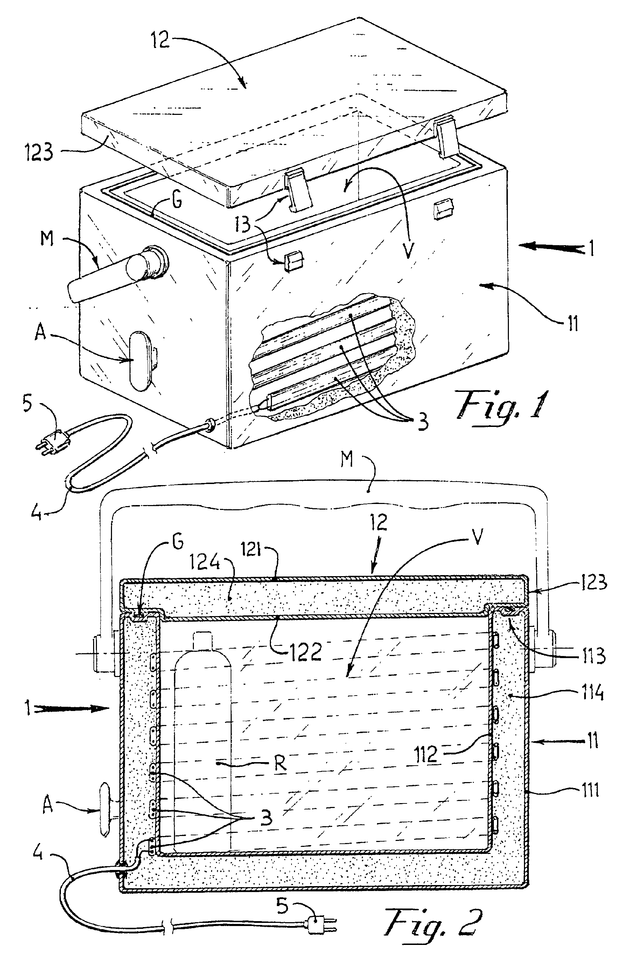

As it can be seen from the above-mentioned Figures, in which the common items are marked with the same reference numerals, the container 1 according to the present invention comprises a parallelepipedal container that is made up of a tank 11 which can be closed by an upper cover 12 that is removably fixed to the tank 11 in a known way and by well-known means, as for example snap connecting elements 13. The vessels R containing the substances to be heated are placed in the inner space V of the the tank 11 (see Figure 2).

Both the tank 11 and its cover 12 are made up of hollow casings which have mutually parallel and spaced-apart outer walls 111, 121 and inner walls 112, 122. The free ends of the outer 111,121 and inner walls 112, 122 are suitably connected by perimetral walls 113, 123 in order to form respective hollow casings. As it is well-known, the dead-air space 114, 124 of such hollow casings are filled with insulating material of known type. Obviously, the set comprises a handle M, a reel A for the storage of the cable and moreover handgrips (not shown) which are shaped and placed in a known way. A suitable gasket G is interposed between the cover 12 and the upper edge of the tank 11.

Till now, the described container is practically a normal insulated container of common use.

According to the invention and as it can be seen from the Figure 2, a particular electric heating element is placed in the dead-air space 114 of the tank 11 and it is applied to the outer surface of the inner walls 112 of the tank 11.

Such heating element is a special cable, commonly named as "self regulating cable" of known type and of normal availability, which has the characteristic of decreasing its electrical conductance as the temperature is increasing.

As it is also known, the self regulating cable, which is marked with the reference numeral 3 in the Figures 1 and 2, presents a structure of a flat cable made of two parallel copper wires which are interconnected by a ribbon of a particular composite material which automatically varies its electrical conductance with changes in temperature.

The whole is covered by suitable protecting sleeves.

More precisely, the ribbon interconnecting the two parallel conductors consists of a material which decreases its electrical conductance as the temperature increases so much that its electrical conductance practically assumes the value zero when it is reached the characteristic temperature of the used cable.

Since the thermal emission per meter of the self regulating cable 3 is constant and, for the above-stated reasons, it progressively decreases as the temperature increases, it will be possible to produce the desired heating of the inner space V, as well as the heating of the vessels R and of the substances therein stored, by suitably dimensioning the length of the cable. Clearly, the heating can be more or less rapid according to the length of the used self regulating cable 3 and, obviously, the heating will automatically stop when it is reached the characteristic maximum temperature of the selected self regulating cable 3.

In the embodiment shown in the Figures 1 and 2, the measured length of the selected self regulating cable is spirally wound round the inner wall 112 of the tank 11 and it presents an ending portion provided with a suitable plug 5.

From what stated it is clear the operation of the container 1 according to the invention.

After removing the cover 12, the vessels R, or other similar containers holding the substances to be heated ( in Figure 2 is indicated only one vessel by means of thin line), are placed in the inner space V of the tank 11.

After replacing and fixing the cover 12 to the tank 11, the plug 5 is inserted in a socket when the vessels and their substances have a temperature which is lower than the minimum operating temperature and also when the ambient temperature is lower than the minimum operating temperature. Therefore, the self regulating cable 3 will start the heating of the inner space V and, by consequence, of the vessels R therein stored.

The duration of the heating depends on the type of the selected self regulating cable 3 and on its predetenninated length.

When it is reached the desired highest temperature, the thermal emission of the self regulating cable 3 is automatically cut off and the reached temperature will remain constant for the above stated reasons.

From what stated and described it is clear that the use of the heating container according to the invention affords a maximum operation safety because it avoids all the drawbacks and the risks arising from the irrational and uncertain heating systems which are commonly used. Therefore, the container according to the invention prevents the dangerous accidents, which are caused by an incorrect intervention of the operator, as well as, in the case of heating containers which are controlled by thermostatic devices, it avoids the drawbacks and the dangers which are arising from the faults of the thermostatic devices.

Moreover, the use of the thermally self regulating cable as heating element affords a more safe, simple and cheap use than the known heating systems which are controlled by electromechanical or electronic thermostats and similar devices that, as above stated, they are subject to failure, they are more complicated in their use as well as in their structure, and therefore they increase the total production costs.

In conclusion, it is to be pointed out that the above described heating container can advantageously be made out of sheet steel as well as of thermoplastic material because the maximum operating temperatures are very low. Moreover, the shapes and the dimensions of the heating container can vary according to the use.

It is well understood that modifications and variations may be made to the heating container forming the object of the present invention without departing however from the scope defined by the following claims with reference to the accompanying drawings and thence from the protection extent of the present industrial invention.

## Claims

1. Container comprising a thermically self regulating electric heater applicable in particular for heating substances to be maintained at a constant maximum temperature, said container (1) being constituted by a tank (11) and its closing cover (12) both made up of thermally insulated walls, the said cover (12) being removably fixable to said tank (11) by means of snap connecting elements (13) or similar elements, the container (1) being moreover provided with a suitable handle (M) and/or eventual handgrips in order to facilitate its transport, the said walls of the said tank (11) and its closing cover (12) being moreover made up of respective outer walls (111, 121) and inner walls (112, 122) which are interconnected, in correspondance of their free ends, by perimetral walls (113, 123) in order to form respective hollow casings (114, 124) which are filled with suitable insulating materials, the whole being of known type because the basic structure of the container is practically equal to that of a normal insulated container of common use, the container forming the object of the present invention is **characterized in that** a particular self regulating cable (3), of known type, is placed in the dead-air space (114) of the side walls of the tank (11) and it is closely applied to the surface of the respective inner walls (112), the said self regulating cable (3) has the particular characteristic of decrease its electrical conductance as its temperature increases, so that, the self regulating cable (3) generates thermal energy, when it is electrically feeded, by means of a suitable supply cable (4) and a respective element (5) for the connection to a suitable source of electric power, and the quantity of heat, which is produced according to the characteristics of the used self regulating cable (3) as well as to the used length of it, will heat the inner space (V) of the said container (1) and, by consequence, the vessels (R) and the substances therein stored, the heating being practically stopped when it is reached the optimum operating temperature that remains constant.

2. Container according to the claim 1, **characterized in that** the dimensions and the shape of the same can widely vary according to the various necessities of its use.

3. Container according to 10the previous claims, **characterized in that** the insulated casing forming the tank (11) and the cover (12) are delimited by respective outer walls (111, 121), inner walls (112, 122) and walls (113, 123) which are interconnecting the free ends of the outer and inner walls, these walls (111, 121; 112, 122; 113, 123) can be made out, in a known way and by known techniques, of thermoplastic material as well as of suitable sheet steel.
